# EUROPEAN PATENT APPLICATION

(11) **EP 4 564 720 A1**
(43) Date of publication of application: **04.06.2025**
(21) Application number: 23845449.0
(22) Date of filing: 21.07.2023
(51) Int. Cl.: H04L 5/00

(54) **METHOD AND APPARATUS FOR WIRELESS COMMUNICATION**

(30) Priority: 26.07.2022 CN 202210885584
(71) Applicant: SHANGHAI LANGBO COMMUNICATION TECHNOLOGY COMPANY LIMITED, Shanghai 200240 (CN)
(72) Inventor: JIANG, Qi, Shanghai 201206 (CN); ZHANG, Xiaobo, Shanghai 201206 (CN)
(74) Representative: Gunzelmann, Rainer
(86) International application number: PCT/CN2023/108578
(87) International publication number: WO 2024/022239

(57) **Abstract**

Disclosed in the present application are a method and apparatus for wireless communication. The method comprises: a node first receiving a first RRC signaling set, then receiving first DCI, and receiving a PDSCH on each cell which is comprised in a first cell set, wherein the first RRC signaling set comprises first RRC signaling, and the first RRC signaling is configured to a first cell; the first DCI is used for scheduling PDSCHs which are comprised in the first cell set, and the first cell is one of the cells which are comprised in the first cell set; a first domain set in the first DCI is applied to the first cell set; an indication of the first domain set in the first DCI depends on a first parameter set; and whether the first parameter set uses the configuration of the first RRC signaling is related to the number of cells which are comprised in the first cell set. The present application improves a configuration mode in which a plurality of carriers are scheduled by means of single DCI, so as to improve the overall performance.

## Description

### TECHNICAL FIELD

The present application relates to methods and devices in wireless communication systems, and in particular to a transmission scheme and device of multi-carrier in a wireless communication system.

### BACKGROUND

Application scenarios of future wireless communication systems are becoming increasingly diversified, and different application scenarios have different performance demands on systems. In order to meet different performance requirements of various application scenarios, it was decided at 3rd Generation Partner Project (3GPP) Radio Access Network (RAN) #72th plenary that a study on New Radio (NR), or what is called Fifth Generation (5G) shall be conducted. The work item of NR was approved at the 3GPP RAN #75th plenary to standardize NR.

Multicarrier (including carrier aggregation and dual connectivity) technologies are an important part of NR technologies. In order to adapt to diverse application scenarios and meet different needs, 3GPP has been evolving multi-carrier technologies since Rel-15 version.

### SUMMARY

In the process of multicarrier communications, such as in Carrier Aggregation (CA), the system supports cross-carrier scheduling. In networks supported by the existing standard, such as R17 and previous versions of 5G New Radio (NR), for multiple scheduled carriers, scheduling is only supported on a corresponding carrier or a corresponding Physical Downlink Control Channel (PDCCH), rather than through a same PDCCH on a same carrier. In the relevant discussions of Rel-18, the topic of multi-carrier enhancement began to be discussed, and under this topic, a PDCCH can simultaneously schedule data channels on multiple carriers to improve the overall performance.

The present application discloses a solution to the problem of one PDCCH scheduling multiple carriers simultaneously in NR's multi-carrier system. It should be noted that though the present application only took PDCCH scheduling in multi-carrier for example in the statement above; the present application is also applicable to other scenarios facing similar problems (such as other scenarios with higher requirements for controlling channel capacity, including but not limited to capacity enhancement systems, systems adopting higher frequency, coverage enhancement systems, unlicensed frequency-domain communications, Internet of Things (IoT), Ultra Reliable Low Latency Communication (URLLC) networks, Vehicle-to-everything, etc.), where similar technical effects can also be achieved. Additionally, the adoption of a unified solution for various scenarios, including but not limited to scenarios of multicarrier, contributes to the reduction of hardware complexity and costs. If no conflict is incurred, embodiments in a first node in the present application and the characteristics of the embodiments are also applicable to a second node, and vice versa. Particularly, for interpretations of the terminology, nouns, functions and variants (if not specified) in the present application, refer to definitions given in TS36 series, TS38 series and TS37 series of 3GPP specifications. If necessary, reference can be made to 3GPP standards TS38.211, TS38.212, TS38.213, TS38.214, TS38.215, TS38.321, TS38.331, TS38.305, TS37.355 to assist in understanding the present application.

The present application provides a method in a first node for wireless communications, comprising:
receiving a first RRC (Radio Resource Control) signaling set;
receiving first DCI (Downlink Control Information); and
receiving a PDSCH (Physical Downlink Shared Channel) on each cell comprised in a first cell set;
herein, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, one feature of the above method is in: when multiple serving cells are simultaneously scheduled by one DCI, partial RRC configurations of the multiple serving cells need to be consistent.

In one embodiment, one feature of the above method is in: simplifying the implementation method of multiple serving cells simultaneously being scheduled by one DCI, thereby reducing the implementation complexity.

In one embodiment, one feature of the above method is in: reducing the signaling overhead and improving the system efficiency while ensuring the scheduling flexibility.

According to one aspect of the present application, it is characterized in that the first RRC signaling is a PDSCH-Config.

According to one aspect of the present application, it is characterized in that the first RRC signaling comprises at least one of PDSCH-ConfigCommon or a PDSCH-ServingCellConfig.

According to one aspect of the present application, it is characterized in that the first RRC signaling is BWP (Bandwidth Part)-DownlinkCommon.

According to one aspect of the present application, it is characterized in that a number of cell(s) comprised in the first cell set is greater than 1; the first parameter set comprises a first parameter subset, and the first parameter subset is default.

In one embodiment, one feature of the above method is in: by applying the default first parameter subset to an indication of the first field set in the first DCI, simplifying the implementation of a single DCI scheduling multiple cells simultaneously.

According to one aspect of the present application, it is characterized in that a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

In one embodiment, one feature of the above method is in: applying the second RRC signaling to an indication of the first field set in the first DCI to simplify the implementation method of a single DCI scheduling multiple cells simultaneously.

According to one aspect of the present application, it is characterized in that the second RRC signaling is configured for a first reference cell, the first reference cell is a cell other than the first cell and in the first cell set, and a second field in the first DCI is used to determine the first reference cell.

In one embodiment, one feature of the above method is in: dynamically indicating the first reference cell to enable a single DCI scheduling multiple cells more flexible.

According to one aspect of the present application, it is characterized in that a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one RRC signaling in the multiple RRC signalings, and the configurations of the multiple RRC signalings for the second parameter set are expected to be the same.

In one embodiment, one feature of the above method is in: configuring multiple simultaneously scheduled cells with same RRC parameters to simplify the implementation method of a single DCI scheduling multiple cells simultaneously.

The present application provides a method in a second node for wireless communications, comprising:
transmitting a first RRC signaling set;
transmitting a first DCI; and
transmitting a PDSCH on each cell comprised in a first cell set;
herein, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

According to one aspect of the present application, it is characterized in that the first RRC signaling is a PDSCH-Config.

According to one aspect of the present application, it is characterized in that the first RRC signaling comprises at least one of PDSCH-ConfigCommon or a PDSCH-ServingCellConfig.

According to one aspect of the present application, it is characterized in that the first RRC signaling is BWP-DownlinkCommon.

According to one aspect of the present application, it is characterized in that a number of cell(s) comprised in the first cell set is greater than 1; the first parameter set comprises a first parameter subset, and the first parameter subset is default.

According to one aspect of the present application, it is characterized in that a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

According to one aspect of the present application, it is characterized in that the second RRC signaling is configured for a first reference cell, the first reference cell is a cell other than the first cell and in the first cell set, and a second field in the first DCI is used to determine the first reference cell.

According to one aspect of the present application, it is characterized in that a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one RRC signaling in the multiple RRC signalings, and the configurations of the multiple RRC signalings for the second parameter set are expected to be the same.

The present application provides a first node for wireless communications, comprising:
a first receiving, receiving a first RRC signaling set, receiving a first DCI and receiving a PDSCH on each cell comprised in a first cell set;
herein, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

The present application provides a second node for wireless communications, comprising:
a first transmitter, transmitting a first RRC signaling set, transmitting a first DCI and transmitting a PDSCH on each cell comprised in a first cell set;
herein, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, advantages of the scheme in the present application are: simplifying the implementation method of multiple serving cells simultaneously scheduled by one DCI, thereby reducing the implementation complexity; reducing the signaling overhead and improving the system efficiency while ensuring the scheduling flexibility.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of the processing of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of transmission between a first node and a second node according to one embodiment of the present application;
FIG. 6 illustrates a schematic diagram of a first parameter subset according to one embodiment of the present application;
FIG. 7 illustrates a schematic diagram of a second RRC signaling according to one embodiment of the present application;
FIG. 8 illustrates a schematic diagram of a first reference cell according to one embodiment of the present application;
FIG. 9 illustrates a schematic diagram of a second parameter set according to one embodiment of the present application;
FIG. 10 illustrates a structure block diagram of a processor in a first node according to one embodiment of the present application;
FIG. 11 illustrates a structure block diagram of a processor in a second node according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

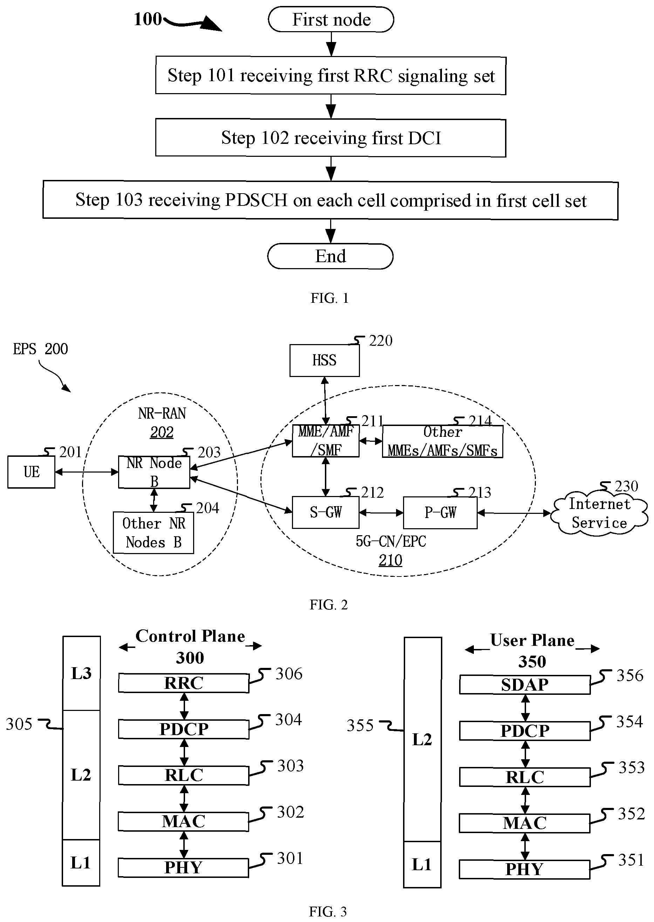

Embodiment 1 illustrates a flowchart of the processing of a first node, as shown in FIG. 1. In 100 illustrated by FIG. 1, each box represents a step. In Embodiment 1, a first node in the present application receives a first RRC signaling set in step 101; receives a first DCI in step 102; receives a PDSCH on each cell comprised in a first cell set in step 103.

In embodiment 1, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the first RRC signaling set comprises an RRC signaling.

In one embodiment, the first RRC signaling set comprises multiple RRC signalings.

In one embodiment, the RRC signaling in the present application corresponds to an IE (Information Element) in TS 38.331.

In one embodiment, a physical-layer channel occupied by the first DCI comprises a PDCCH.

In one embodiment, the first cell set only comprises one cell.

In one embodiment, the first cell set only comprises one serving cell.

In one embodiment, the first cell set comprises multiple cells.

In one embodiment, the first cell set only comprises multiple serving cells.

In one embodiment, the first DCI is used to determine the first cell set.

In one embodiment, the first DCI is used to indicate the first cell set.

In one embodiment, the first DCI is used to schedule a PDSCH on each cell comprised in the first cell set.

In one embodiment, the first cell is a serving cell.

In one embodiment, the first cell is a cell.

In one embodiment, the first cell corresponds to a CC (Component Carrier).

In one embodiment, the first cell corresponds to a PCI (Physical Cell Identity).

In one embodiment, the first cell corresponds to a ServCellIndex.

In one embodiment, the first cell corresponds to a schedulingCellId.

In one embodiment, the first cell corresponds to a Carrier Indicator Field (CIF).

In one embodiment, the meaning of an indication of the first field set in the first DCI depending on a first parameter set includes: the first field set in the first DCI refers to a configuration of the first parameter set.

In one embodiment, the meaning of an indication of the first field set in the first DCI depending on a first parameter set includes: at least one field in the first field set of the first DCI is used to indicate one of multiple parameters configured in the first parameter set.

In one embodiment, the meaning of an indication of the first field set in the first DCI depending on a first parameter set includes: an interpretation of at least one field in the first field set of the first DCI refers to the first parameter set.

In one embodiment, the first field set in the first DCI comprises a TDRA (Time Domain Resource Assignment) field in the first DCI.

In one embodiment, the first field set in the first DCI comprises a FDRA (Frequency Domain Resource Assignment) field in the first DCI.

In one embodiment, the first field set in the first DCI comprises a VRB-to-PRB mapping field in the first DCI.

In one embodiment, the first field set in the first DCI comprises an MSB bit in an FDRA field in the first DCI.

In one embodiment, the first field set in the first DCI comprises an MCS (Modulation and Coding Scheme) field in the first DCI.

In one embodiment, the first field set in the first DCI comprises an NDI (New Data Indicator) field in the first DCI.

In one embodiment, the first field set in the first DCI comprises an RV (Redundancy Version) field in the first DCI.

In one embodiment, the first field set in the first DCI comprises a HARQ (Hybrid Automatic Repeat reQuest) process number field in the first DCI.

In one embodiment, the first field set in the first DCI comprises a DAI (Downlink Assignment Index) field in the first DCI.

In one embodiment, the first field set in the first DCI comprises a CBGTI (Code Block Group Transmission Information) field in the first DCI.

In one embodiment, the first field set in the first DCI comprises a CBGFI (Code Block Group Flash Out Information) field in the first DCI.

In one embodiment, the first parameter set is used to determine a location of time-domain resources occupied by a PDSCH scheduled by the first DCI.

In one subembodiment of the embodiment, when the first parameter set adopts the configuration of the first RRC signaling, the first RRC signaling corresponds to a PDSCH-Config IE, and the configuration of the first RRC signaling comprises a pdsch-TimeDomainAllocationList field in a PDSCH-Config IE.

In one subembodiment of the embodiment, when the first parameter set adopts the configuration of the first RRC signaling, the first RRC signaling corresponds to a PDSCH-ConfigCommon IE, and the configuration of the first RRC signaling comprises a pdsch-TimeDomainAllocationList field in a PDSCH-ConfigCommon IE.

In one embodiment, the first parameter set is used to determine whether PDSCH(s) scheduled by the first DCI is(are) interleaved.

In one subembodiment of the embodiment, when the first parameter set adopts the configuration of the first RRC signaling, the first RRC signaling corresponds to a PDSCH-Config IE, and the configuration of the first RRC signaling comprises a vrb-ToPRB-Interleaver field in a PDSCH-Config IE.

In one embodiment, the first parameter set is used to determine a resource allocation type of a PDSCH scheduled by the first DCI.

In one subembodiment of the embodiment, when the first parameter set adopts the configuration of the first RRC signaling, the first RRC signaling corresponds to a PDSCH-Config IE, and the configuration of the first RRC signaling comprises a resourceAllocation field in a PDSCH-Config IE.

In one embodiment, the first parameter set is used to determine an RBG (Resource Block Group) size of a PDSCH scheduled by the first DCI.

In one subembodiment of the embodiment, when the first parameter set adopts the configuration of the first RRC signaling, the first RRC signaling corresponds to a PDSCH-Config IE, and the configuration of the first RRC signaling comprises a rbg-Size field in a PDSCH-Config IE.

In one embodiment, the first parameter set is used to determine a maximum number of code words for a PDSCH scheduled by the first DCI.

In one subembodiment of the embodiment, when the first parameter set adopts the configuration of the first RRC signaling, the first RRC signaling corresponds to a PDSCH-Config IE, and the configuration of the first RRC signaling comprises a maxNrofCodeWordsScheduledByDCI field in a PDSCH-Config IE.

In one embodiment, the first parameter set is used to determine a number of repetitions of data scheduled by the first DCI.

In one subembodiment of the embodiment, when the first parameter set adopts the configuration of the first RRC signaling, the first RRC signaling corresponds to a PDSCH-Config IE, and the configuration of the first RRC signaling comprises a pdsch-AggregationFactor field in a PDSCH-Config IE.

In one embodiment, the first parameter set is used to determine a maximum number of CBGs per TB (Transport Block) of data scheduled by the first DCI.

In one subembodiment of the embodiment, when the first parameter set adopts the configuration of the first RRC signaling, the first RRC signaling corresponds to a PDSCH-ServingCellConfig IE, and the configuration of the first RRC signaling comprises a maxCodeBlockGroupsPerTransportBlock field in a PDSCH-ServingCellConfig IE.

In one embodiment, the first parameter set is used to determine a maximum MIMO Layer number of a PDSCH scheduled by the first DCI.

In one subembodiment of the embodiment, when the first parameter set adopts the configuration of the first RRC signaling, the first RRC signaling corresponds to a PDSCH-ServingCellConfig IE, and the configuration of the first RRC signaling comprises a maxMIMO-Layers field in a PDSCH-ServingCellConfig IE.

In one embodiment, the first parameter set is used to determine a number of HARQ processes of a PDSCH scheduled by the first DCI.

In one subembodiment of the embodiment, when the first parameter set adopts the configuration of the first RRC signaling, the first RRC signaling corresponds to a PDSCH-ServingCellConfig IE, and the configuration of the first RRC signaling comprises a nrofHARQ-ProcessesForPDSCH field in a PDSCH-ServingCellConfig IE.

In one embodiment, when an RRC signaling belongs to a ServingCellConfig IE configured for a cell, the RRC signaling is configured for the cell.

In one embodiment, when an RRC signaling belongs to a BWP-Downlink IE configured for a cell, the RRC signaling is configured for the cell.

In one embodiment, when an RRC signaling belongs to a BWP-DownlinkCommon IE configured for a cell, the RRC signaling is configured for the cell.

In one embodiment, when an RRC signaling belongs to a BWP-DownlinkDedicated IE configured for a cell, the RRC signaling is configured for the cell.

In one embodiment, when a number of cell(s) comprised in the first cell set is greater than 1, the first parameter set does not adopt the configuration of the first RRC signaling, and the first parameter set adopts a configuration of an RRC signaling other than the first RRC signaling.

In one embodiment, when a number of cell(s) comprised in the first cell set is greater than 1, the first parameter set does not adopt the configuration of the first RRC signaling, and parameters comprised in the first parameter set are set to a pre-defined value.

In one embodiment, when a number of cell(s) comprised in the first cell set is greater than 1, the first parameter set does not adopt the configuration of the first RRC signaling, and parameters comprised in the first parameter set are default.

In one embodiment, when a number of cell(s) comprised in the first cell set is greater than 1, the first parameter set does not adopt the configuration of the first RRC signaling, and parameters comprised in the first parameter set are fixed.

### Embodiment 2

Embodiment 2 illustrates a schematic diagram of a network architecture, as shown in FIG. 2.

Embodiment 2 illustrates a schematic diagram of a network architecture according to one embodiment of the present application, as shown in FIG. 2. FIG. 2 is a diagram illustrating a V2X communication architecture of 5G NR, Long-Term Evolution (LTE), and Long-Term Evolution Advanced (LTE-A) systems. The 5G NR or LTE network architecture may be called a 5G System/Evolved Packet System (5GS/EPS) 200 or other appropriate terms.

The V2X communication architecture in Embodiment 2 may comprise a UE 201, a UE 241 in communication with UE 201, an NG-RAN 202, a 5G Core Network/Evolved Packet Core (5GC/EPC) 210, a Home Subscriber Server (HSS)/ Unified Data Management (UDM) 220, a ProSe feature 250 and a ProSe application server 230. The V2X communication architecture may be interconnected with other access networks. For simple description, the entities/interfaces are not shown. As shown in FIG. 2, the V2X communication architecture provides packet switching services. Those skilled in the art will readily understand that various concepts presented throughout the present application can be extended to networks providing circuit switching services. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the 5GC/EPC 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPS), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/ AMFs/ SMFs 214, a Service Gateway (S-GW)/ User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212, the S-GW/UPF 212 is connected to the P-GW/UPF 213. The P-GW provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming Services (PSS). The ProSe feature 250 refers to logical functions of network-related actions needed for Proximity-based Service (ProSe), including Direct Provisioning Function (DPF), Direct Discovery Name Management Function and EPC-level Discovery ProSe Function. The ProSe application server 230 is featured with functions like storing EPC ProSe user ID, and mapping between an application-layer user ID and an EPC ProSe user ID as well as allocating ProSe-restricted code-suffix pool.

In one embodiment, the UE 201 corresponds to the first node in the present application, and the gNB 203 corresponds to the second node in the present application.

In one embodiment, the UE 201 supports multiple carriers to be scheduled by a same DCI.

In one embodiment, the UE 201 supports multiple serving cells to be scheduled by a same DCI.

In one embodiment, the UE 201 supports cross-carrier scheduling.

In one embodiment, the NR node B corresponds to the second node in the present application.

In one embodiment, the NR node B supports multiple carriers to be scheduled by a same DCI.

In one embodiment, the NR node B supports multiple serving cells to be scheduled by a same DCI.

In one embodiment, the NR node B supports cross-carrier scheduling.

In one embodiment, the NR node B is a base station.

In one embodiment, the NR node B is a cell.

In one embodiment, the NR node B comprises multiple cells.

In one embodiment, the NR node B is used to determine transmission on multiple serving cells.

In one embodiment, the first node in the present application corresponds to the UE 201, and the second node in the present application corresponds to the NR node B.

In one embodiment, the first node and the second node in the present application are respectively the UE 201 and the gNB 203.

In one embodiment, the first node in the present application is the UE 201, and the second node in the present application is the UE 241.

### Embodiment 3

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG. 3, the radio protocol architecture for a first communication node (UE, gNB or an RSU in V2X) and a second communication node (gNB, UE or an RSU in V2X) is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of the link between the first communication node and the second communication node via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and also provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the PDCP 304 of the second communication node is used for generating scheduling of the first communication node.

In one embodiment, the PDCP 354 of the second communication node is used for generating scheduling of the first communication node.

In one embodiment, the first RRC signaling set is generated by the RRC 306.

In one embodiment, the first DCI is generated by the PHY 301 or the PHY 351.

In one embodiment, the PDSCH is generated by the PHY 301 or the PHY 351.

In one embodiment, the PDSCH is generated by the MAC 302 or the MAC 352.

In one embodiment, the PDSCH is generated by the RRC 306.

In one embodiment, the first node is a terminal.

In one embodiment, the first node is a relay.

In one embodiment, the second node is a terminal.

In one embodiment, the second node is a relay.

In one embodiment, the second node is a base station.

In one embodiment, the second node is a gNB.

In one embodiment, the second node is a Transmitter Receiver Point (TRP).

In one embodiment, the second node is used to manage multiple TRPs.

In one embodiment, the second node is a node used to manage multiple cells.

In one embodiment, the second node is a node used to manage multiple serving cells.

### Embodiment 4

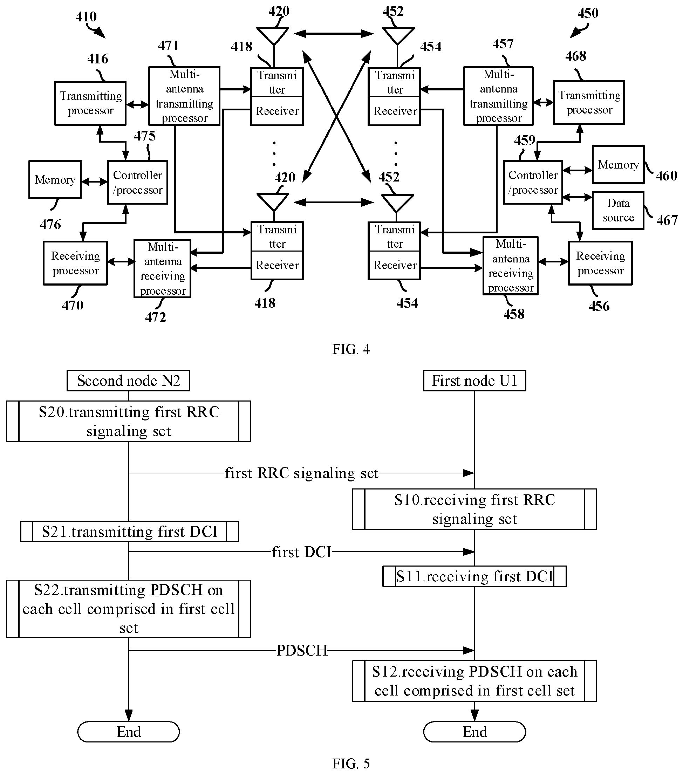

Embodiment 4 illustrates a schematic diagram of a first communication device and a second communication device in the present application, as shown in FIG. 4. FIG. 4 is a block diagram of a first communication device 450 in communication with a second communication device 410 in an access network.

The first communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

In a transmission from the second communication device 410 to the first communication device 450, at the first communication device 410, a higher layer packet from the core network is provided to a controller/ processor 475. The controller/processor 475 provides a function of the L2 layer. In the transmission from the second communication device 410 to the first communication device 450, the controller/ processor 475 provides header compression, encryption, packet segmentation and reordering, and multiplexing between a logical channel and a transport channel, and radio resources allocation for the first communication device 450 based on various priorities. The controller/ processor 475 is also responsible for retransmission of a lost packet and a signaling to the first communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 410, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multi-carrier symbol streams. After that the multi-antenna transmitting processor 471 performs transmission analog precoding/beamforming on the time-domain multi-carrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the second communication device 410 to the first communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the first communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the second communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the second communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the first communication device 450 to the second communication device 410, at the second communication device 450, the data source 467 is configured to provide a higher-layer packet to the controller/processor 459. The data source 467 represents all protocol layers above the L2 layer. Similar to a transmitting function of the second communication device 410 described in the transmission from the second communication device 410 to the first communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the second communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the first communication device 450 to the second communication device 410, the function at the second communication device 410 is similar to the receiving function at the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the first communication device 450 to the second communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first communication device 450 comprises: at least one processor and at least one memory. The at least one memory comprises computer program codes; the at least one memory and the computer program codes are configured to be used in collaboration with the at least one processor, the first communication device 450 at least: first receives a first RRC signaling set, then receives a first DCI, receives a PDSCH on each cell comprised in a first cell set; the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the first communication device 450 comprises at least one processor and at least one memory. a memory that stores a computer readable instruction program. The computer readable instruction program generates an action when executed by at least one processor. The action includes: first receiving a first RRC signaling set, then receiving a first DCI, and receiving a PDSCH on each cell comprised in a first cell set; the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the second communication device 410 comprises at least one processor and at least one memory. The at least one memory comprises computer program codes; the at least one memory and the computer program codes are configured to be used in collaboration with the at least one processor. The second communication device 410 at least: first transmits a first RRC signaling set, then transmits a first DCI, and transmits a PDSCH on each cell comprised in a first cell set; the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the second communication device 410 comprises a memory that stores a computer readable instruction program. The computer readable instruction program generates an action when executed by at least one processor. The action includes: first transmitting a first RRC signaling set, then transmitting a first DCI, and transmitting a PDSCH on each cell comprised in a first cell set; the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the first communication device 450 corresponds to a first node in the present application.

In one embodiment, the second communication device 410 corresponds to a second node in the present application.

In one embodiment, the first communication device 450 is a UE.

In one embodiment, the first communication device 450 is a terminal.

In one embodiment, the first communication device 450 is a relay.

In one embodiment, the first communication device 450 is a terminal capable of scheduling multiple carriers simultaneously through a first one of PDCCHs.

In one embodiment, the second communication device 410 is a base station.

In one embodiment, the second communication device 410 is a relay.

In one embodiment, the second communication device 410 is a network device.

In one embodiment, the second communication device 410 is a serving cell.

In one embodiment, the second communication device 410 is a TRP.

In one embodiment, the second communication device 410 is a base station capable of scheduling multiple carriers simultaneously through a first one of PDCCHs.

In one embodiment, at least first four of the antenna 452, the receiver 454, the multi-antenna receiving processor 458, the receiving processor 456 and the controller/processor 459 are used to receive a first RRC signaling set; at least first four of the antenna 420, the transmitter 418, the multi-antenna transmitting processor 471, the transmitting processor 416 and the controller/processor 475 are used to transmit a first RRC signaling set.

In one embodiment, at least first four of the antenna 452, the transmitter 454, the multi-antenna transmitting processor 457, the transmitting processor 468, and the controller/processor 459 are used to receive a first DCI; at least first four of the antenna 420, the receiver 418, the multi-antenna receiving processor 472, the receiving processor 470 and the controller/processor 475 are used to transmit a first DCI.

In one embodiment, at least first four of the antenna 452, the transmitter 454, the multi-antenna transmitting processor 457, the transmitting processor 468, and the controller/processor 459 are used to receive a PDSCH on each cell comprised in a first cell set; at least first four of the antenna 420, the receiver 418, the multi-antenna receiving processor 472, the receiving processor 470 and the controller/processor 475 are used to transmit a PDSCH on each cell comprised in a first cell set.

### Embodiment 5

Embodiment 5 illustrates a flowchart of a transmission between a first node and a second node of one embodiment, as shown in FIG. 5. In FIG. 5, a first node U1 and a second node N2 are in communications via a radio link. It is particularly underlined that the order illustrated in the embodiment does not put constraints over sequences of signal transmissions and implementations. In the absence of conflicts, embodiments, sub-embodiments, and subsidiary embodiments in Embodiment 5 can be applied to other embodiments, sub-embodiments, and subsidiary embodiments in the present application; on the contrary, other embodiments, sub-embodiments, and subsidiary embodiments in the present application can be applied to embodiment 5 without conflict.

**The first node U1** receives a first RRC signaling set in step S10; receives a first DCI in step S11; receives a PDSCH on each cell comprised in a first cell set in step S12.

**The second node N2** transmits a first RRC signaling set in step S20; transmits a first DCI in step S21; transmits a PDSCH on each cell comprised in a first cell set in step S22.

In embodiment 5, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

Typically, the first RRC signaling is a PDSCH-Config.

Typically, the first RRC signaling is a PDSCH-Config IE.

Typically, the first RRC signaling comprises a PDSCH-Config IE.

Typically, the first RRC signaling is at least one of PDSCH-ConfigCommon or a PDSCH-Serving Cell Config.

Typically, the first RRC signaling comprises a PDSCH-ConfigCommon IE.

Typically, the first RRC signaling comprises a PDSCH-ServingCellConfig IE.

Typically, the first RRC signaling comprises a PDSCH-ConfigCommon IE and a PDSCH-ServingCellConfig IE.

Typically, the first RRC signaling is a PDSCH-ConfigCommon IE.

Typically, the first RRC signaling is a PDSCH-ServingCellConfig IE.

Typically, the first RRC signaling comprises BWP-DownlinkCommon.

In one embodiment, the first RRC signaling comprises a BWP-DownlinkCommon IE.

In one embodiment, the first parameter set is used to determine a number of Resource Blocks (RBs) corresponding to frequency-domain resources occupied by the first cell scheduled by the first DCI.

In one subembodiment of the embodiment, when a number of cell(s) comprised in the first cell set is 1, a number of RBs corresponding to frequency-domain resources occupied by the first cell adopts a configuration in a BWP-DownlinkCommon IE comprised in the first RRC signaling.

In one subembodiment of the embodiment, when a number of cell(s) comprised in the first cell set is greater than 1, a number of RB(s) corresponding to frequency-domain resources occupied by the first cell does not adopt a configuration in a BWP-DownlinkCommon IE comprised in the first RRC signaling, and a number of RB(s) corresponding to frequency-domain resources occupied by the first cell is default or fixed.

Typically, a number of cell(s) comprised in the first cell set is greater than 1; the first parameter set comprises a first parameter subset, and the first parameter subset is default.

In one embodiment, the meaning of the first parameter subset being default includes: parameters comprised in the first parameter subset are fixed.

In one embodiment, the meaning of the first parameter subset being default includes: parameters comprised in the first parameter subset are not configurable.

In one embodiment, the meaning of the first parameter subset being default includes: parameters comprised in the first parameter subset do not have a corresponding configuration message.

In one embodiment, the meaning of the first parameter subset being default includes: parameters comprised in the first parameter subset do not need to be configured through an RRC signaling.

In one embodiment, at least one parameter comprised in the first parameter subset is used to determine a resource mapping method.

In one embodiment, at least one parameter comprised in the first parameter subset is used to determine a resource configuration method.

In one embodiment, at least one parameter comprised in the first parameter subset is used to determine whether interweaving occurs.

In one embodiment, at least one of the parameters comprised in the first parameter subset is used to determine a BWP (Bandwidth Part) bandwidth.

In one embodiment, at least one parameter comprised in the first parameter subset is used to determine a mapping mode of VRB (Virtual RB) to PRB (Physical RB).

In one embodiment, at least one parameter comprised in the first parameter subset is used to determine that PDSCH(s) on cell(s) comprised in the first cell set scheduled by the first DCI is(are) not interleaved.

In one embodiment, at least one parameter comprised in the first parameter subset corresponds to a vrb-ToPRB-Interleaver field in a PDSCH-Config IE, and a value corresponding to the vrb-ToPRB-Interleaver field is n0, indicating that it is not interleaved.

In one embodiment, at least one parameter comprised in the first parameter subset corresponds to a resourceAllocation field in a PDSCH-Config IE, and a value corresponding to a resourceAllocation field is resourceAllocationType0, indicating the use of type 0 resource allocation method.

In one embodiment, at least one parameter comprised in the first parameter subset corresponds to a genericParameters field in a BWP-DownlinkCommon IE, and a value corresponding to a resourceAllocation field is BWP-X, indicating the use of a BWP configuration corresponding to BWP-X.

Typically, the first RRC signaling comprises a first parameter and a second parameter, the first parameter is used to determine whether PDSCH(s) scheduled in the first cell is(are) interleaved, and the second parameter is used to determine a bandwidth of a BWP where PDSCH(s) scheduled in the first cell is(are) located, and only one of the first parameter and the second parameter belongs to the first parameter subset.

In one embodiment, the first parameter corresponds to a vrb-ToPRB-Interleaver field in a PDSCH-Config.

In one embodiment, the second parameter corresponds to a genericParameters field in a BWP-DownlinkCommon IE.

In one embodiment, the second parameter corresponds to a locationAndBandwidth field in a BWP.

In one embodiment, the second parameter corresponds to a subcarrierSpacing field in a BWP.

Typically, a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

In one embodiment, the second RRC signaling is configured for a first reference cell, and the first reference cell is a cell in the first cell set.

In one subembodiment of the above embodiment, the first cell set comprises K1 cells, K1 being a positive integer greater than 1.

In one subembodiment of the embodiment, the first reference cell is a cell with a smallest cell index among the K1 cells.

In one subembodiment of the embodiment, the first reference cell is a cell with a largest cell index among the K1 cells.

In one subembodiment of the embodiment, the first reference cell is a cell with a highest center frequency point among the K1 cells.

In one subembodiment of the embodiment, the first reference cell is a cell with a lowest center frequency point among the K1 cells.

In one subembodiment of the embodiment, the first reference cell is a cell with a widest bandwidth among the K1 cells.

In one subembodiment of the embodiment, the first reference cell is a cell with a narrowest bandwidth among the K1 cells.

In one subembodiment of the embodiment, the first reference cell is a cell with a largest subcarrier spacing among the K1 cells.

In one subembodiment of the embodiment, the first reference cell is a cell with a smallest subcarrier spacing among the K1 cells.

In one subembodiment of the embodiment, the first reference cell is a cell ranked first in DCI among multiple cells scheduled by the first DCI.

In one subembodiment of the embodiment, the first reference cell is a first one of cells indicated among multiple cells scheduled by the first DCI.

In one subembodiment of the embodiment, the K1 cells respectively correspond to K1 sub-fields in the first DCI, and the first cell is a cell indicated by a subfield ranked first in the first DCI among the K1 subfields.

In one subembodiment of the embodiment, the K1 cells respectively correspond to K1 sub-fields in the first DCI, and the first cell is a cell indicated by a subfield ranked last in the first DCI among the K1 subfields.

In one embodiment, the cell index in the present application comprises a PCI.

In one embodiment, the cell index in the present application comprises ServCellIndex.

In one embodiment, the cell index in the present application comprises schedulingCellId.

In one embodiment, the cell index in the present application comprises a CIF.

In one embodiment, the second parameter subset comprises a pdsch-TimeDomainAllocationListyul field in a PDSCH-ConfigCommon IE.

In one embodiment, the second parameter subset comprises a vrb-ToPRB-Interleaver field in a PDSCH-Config IE.

In one embodiment, the second parameter subset comprises a rbg-Size field in a PDSCH-Config IE.

In one embodiment, the second parameter subset comprises a maxNrofCodeWordsScheduledByDCI field in a PDSCH-Config IE.

In one embodiment, the second parameter subset comprises a pdsch-AggregationFactor field in a PDSCH-Config IE.

In one embodiment, the second parameter subset comprises a maxCodeBlockGroupsPerTransportBlock field in a PDSCH-ServingCellConfig IE.

In one embodiment, the second candidate parameter subset comprises a maxMIMO-Layers field in a PDSCH-ServingCellConfig IE.

In one embodiment, the second parameter subset comprises a nrofHARQ-ProcessesForPDSCH field in a PDSCH-ServingCellConfig IE.

In one embodiment, the second parameter subset comprises a genericParameters field in a BWP-DownlinkCommon IE.

Typically, the second RRC signaling is configured for a first reference cell, the first reference cell is a cell other than the first cell and in the first cell set, and a second field in the first DCI is used to determine the first reference cell.

In one embodiment, the second field in the first DCI is used to indicate the first reference cell.

In one embodiment, the second field in the first DCI is also used to indicate the first cell set.

In one embodiment, the first reference cell is a first one of cells in the first cell set indicated by the second field in the first DCI.

Typically, a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one RRC signaling in the multiple RRC signalings, and the configurations of the multiple RRC signalings for the second parameter set are expected to be the same.

In one embodiment, the meaning of an indication of the first field set in the first DCI depending on a second parameter set includes: the first field set in the first DCI refers to a configuration of the second parameter set.

In one embodiment, the meaning of an indication of the first field set in the first DCI depending on a second parameter set includes: at least one field in the first field set of the first DCI is used to indicate one of multiple parameters configured in the second parameter set.

In one embodiment, the meaning of an indication of the first field set in the first DCI depending on a second parameter set includes: an interpretation for at least one field in the first field set of the first DCI refers to the second parameter set.

In one embodiment, at least one parameter comprised in the second parameter set corresponds to a genericParameters field in a BWP-DownlinkCommon IE.

In one embodiment, the second parameter set comprises configuration parameters in a BWP-DownlinkCommon IE.

In one embodiment, a name of the multiple RRC signalings are the same.

In one embodiment, each RRC signaling in the multiple RRC signaling comprises a PDSCH-Config IE.

In one embodiment, each RRC signaling in the multiple RRC signaling comprises a PDSCH-ConfigCommon IE.

In one embodiment, each RRC signaling in the multiple RRC signaling comprises a PDSCH-ServingCellConfig IE.

In one embodiment, each RRC signaling in the multiple RRC signaling comprises a BWP-DownlinkCommon IE.

In one embodiment, the second parameter set comprises a pdsch-TimeDomainAllocationListyul field in a PDSCH-ConfigCommon IE.

In one embodiment, the second parameter set comprises a vrb-ToPRB-Interleaver field in a PDSCH-Config IE.

In one embodiment, the second parameter set comprises a rbg-Size field in a PDSCH-Config IE.

In one embodiment, the second parameter set comprises a maxNrofCodeWordsScheduledByDCI field in a PDSCH-Config IE.

In one embodiment, the second parameter set comprises a pdsch-AggregationFactor field in a PDSCH-Config IE.

In one embodiment, the second parameter set comprises a maxCodeBlockGroupsPerTransportBlock field in a PDSCH-ServingCellConfig IE.

In one embodiment, the second candidate parameter set comprises a maxMIMO-Layers field in a PDSCH-ServingCellConfig IE.

In one embodiment, the second parameter set comprises a nrofHARQ-ProcessesForPDSCH field in a PDSCH-ServingCellConfig IE.

In one embodiment, the second parameter set comprises a resourceAllocation field in a PDSCH-Config IE.

Typically, the first RRC signaling comprises a third parameter and a fourth parameter, the third parameter is used to determine whether PDSCH(s) scheduled in the first cell is(are) interleaved, and the fourth parameter is used to determine a bandwidth of a BWP where PDSCH(s) scheduled in the first cell is(are) located, and only one of the third parameter and the fourth parameter belongs to the second parameter set.

In one embodiment, the third parameter corresponds to a vrb-ToPRB-Interleaver field in a PDSCH-Config.

In one embodiment, the fourth parameter corresponds to a genericParameters field in a BWP-DownlinkCommon IE.

In one embodiment, the fourth parameter corresponds to a locationAndBandwidth field in a BWP.

In one embodiment, the fourth parameter corresponds to a subcarrierSpacing field in a BWP.

In one embodiment, a given RRC signaling is used to indicate the configurations of the multiple RRC signalings for the second parameter set.

In one embodiment, a given RRC signaling is used to indicate that the configurations of the multiple RRC signalings for the second parameter set are the same.

In one embodiment, the configurations of the multiple RRC signalings for the second parameter set comprise one or more fields with a same name comprised in each of the multiple RRC signalings.

In one embodiment, the first DCI is used to schedule K1 PDSCHs, and the K1 PDSCHs are respectively transmitted on K1 cells comprised in the first cell set.

### Embodiment 6

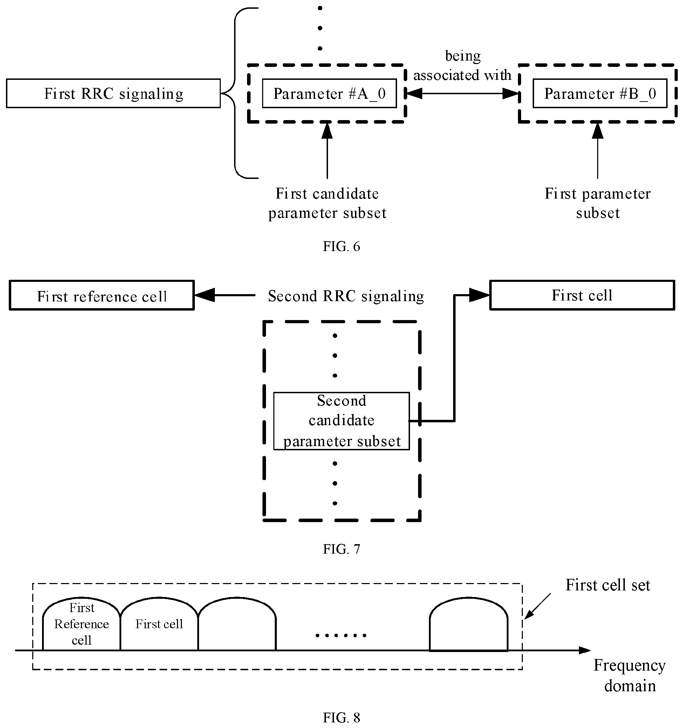

Embodiment 6 illustrates a schematic diagram of a first parameter subset of one embodiment, as shown in FIG. 6. In FIIG. 6, the first RRC signaling comprises a first candidate parameter subset, and the first candidate parameter subset comprises parameter #A_0 as shown in the figure; the first candidate parameter subset corresponds to the first parameter subset, and the first parameter subset comprises parameter #B_0 as shown in the figure; when a number of cell(s) comprised in the first cell set is 1, the first parameter set adopts a configuration of the parameters of the first candidate parameter subset; when a number of cell(s) comprised in the first cell set is greater than 1, the first parameter set adopts a configuration of the parameters of the first parameter subset.

In one embodiment, a configuration for the first parameter subset is default.

In one embodiment, a configuration for the first parameter subset is fixed.

In one embodiment, the first candidate parameter subset is configured through an RRC signaling.

In one embodiment, the first parameter subset does not need to be configured through an RRC signaling.

In one embodiment, the first parameter subset only comprises one parameter.

In one embodiment, the first parameter subset comprises multiple parameters.

In one embodiment, the first candidate parameter subset only comprises one parameter.

In one embodiment, the first candidate parameter subset comprises multiple parameters.

In one embodiment, the first parameter subset is used for a configuration when multiple PDSCHs on multiple cells are simultaneously scheduled.

In one embodiment, the first candidate parameter subset is used for a configuration when one PDSCH on a single cell is scheduled.

### Embodiment 7

Embodiment 7 illustrates a flowchart of a second RRC signaling of an embodiment, as shown in FIG. 7. In FIG. 7, the second RRC signaling is configured for the first reference cell, the second RRC signaling comprises a second candidate parameter subset, and the second candidate parameter subset is used for scheduling a PDSCH in the first cell; the dotted box in the figure represents parameters comprised in the second RRC signaling.

In one embodiment, the first parameter set comprises a second parameter subset, and the second parameter subset applies the second candidate parameter subset.

In one embodiment, the second candidate parameter subset comprises a pdsch-TimeDomainAllocationListyu1 field in a PDSCH-ConfigCommon IE.

In one embodiment, the second candidate parameter subset comprises a vrb-ToPRB-Interleaver field in a PDSCH-Config IE.

In one embodiment, the second candidate parameter subset comprises a rbg-Size field in a PDSCH-Config IE.

In one embodiment, the second candidate parameter subset comprises a maxNrofCodeWordsScheduledByDCI field in a PDSCH-Config IE.

In one embodiment, the second candidate parameter subset comprises a pdsch-AggregationFactor field in a PDSCH-Config IE.

In one embodiment, the second candidate parameter subset comprises a maxCodeBlockGroupsPerTransportBlock field in a PDSCH-ServingCellConfig IE.

In one embodiment, the second candidate parameter subset comprises a maxMIMO-Layers field in a PDSCH-ServingCellConfig IE.

In one embodiment, the second candidate parameter subset comprises a nrofHARQ-ProcessesForPDSCH field in a PDSCH-ServingCellConfig IE.

In one embodiment, the second candidate parameter subset comprises a genericParameters field in a BWP-DownlinkCommon IE.

### Embodiment 8

Embodiment 8 illustrates a schematic diagram of a first reference cell according to one embodiment of the present application, as shown in FIG. 8. In FIG. 8, the first cell set comprises K1 cells, and the first cell and the first reference cell are respectively two different cells in the K1 cells.

In one embodiment, part or all configuration of an RRC signaling for the first reference cell is used for scheduling of a PDSCH of the first cell.

In one embodiment, part or all configuration of an RRC signaling for the first reference cell is configured for scheduling of a PDSCH of each cell in the first cell set.

In one embodiment, K1 is a positive integer greater than 1.

In one embodiment, the first DCI is used to indicate the K1 cells.

In one embodiment, an RRC signaling is used to indicate the K1 cells.

### Embodiment 9

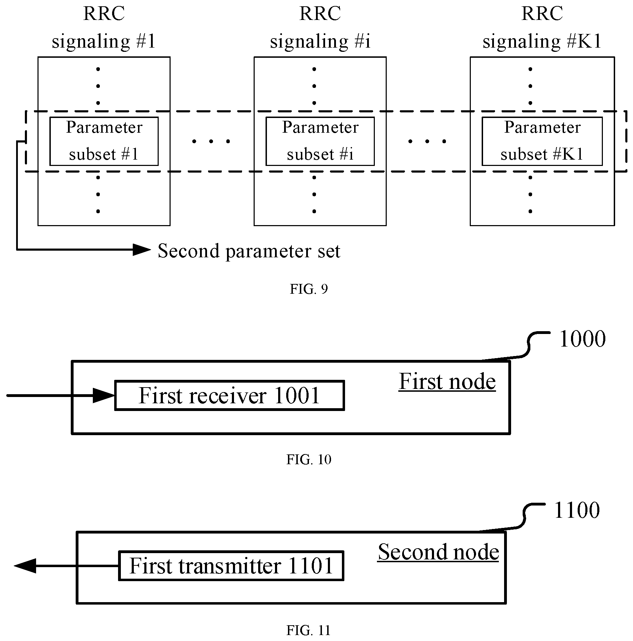

Embodiment 9 illustrates a schematic diagram of a second parameter set, as shown in FIG.9. In FIG.9, the K1 cells comprised in the first cell set are configured by RRC signaling #1 to RRC signaling #K1 in the figure, and the RRC signaling #1 to the RRC signaling #K1 respectively comprise parameter subset #1 to parameter subset #K1; the second parameter set applies at least one parameter subset in the parameter subset #1 to parameter subset #K1 respectively comprised in the RRC signaling #1 to the RRC signaling #K1.

In one embodiment, names corresponding to the parameter subset #1 to the parameter subset #K1 are all the same.

In one embodiment, fields corresponding to the parameter subset #1 to the parameter subset #K1 are all the same.

In one embodiment, values of parameters corresponding to the parameter subset #1 to the parameter subset #K1 are all the same.

In one embodiment, the RRC signaling #i comprises a PDSCH-ConfigCommon IE, and a parameter subset #i comprised in the RRC signaling #i comprises a pdsch-TimeDomainAllocationList field; the i is an integer between 1 and K1.

In one embodiment, the RRC signaling #i comprises a PDSCH-Config IE, and a parameter subset #i comprised in the RRC signaling #i comprises a vrb-ToPRB-Interleaver field; the i is an integer between 1 and K1.

In one embodiment, the RRC signaling #i comprises a PDSCH-Config IE, and a parameter subset #i comprised in the RRC signaling #i comprises a rbg-Size field; the i is an integer between 1 and K1.

In one embodiment, the RRC signaling # i comprises a PDSCH-Config IE, and a parameter subset #i comprised in the RRC signaling #i comprises a maxNrofCodeWordsScheduledByDCI field; the i is an integer between 1 and K1.

In one embodiment, the RRC signaling #i comprises a PDSCH-Config IE, and a parameter subset #i comprised in the RRC signaling #i comprises a pdsch-AggregationFactor field; the i is an integer between 1 and K1.

In one embodiment, the RRC signaling #i comprises a PDSCH-ServingCellConfig IE, and a parameter subset #i comprised in the RRC signaling # i comprises a maxCodeBlockGroupsPerTransportBlock field; the i is an integer between 1 and K1.

In one embodiment, the RRC signaling #i comprises a PDSCH-ServingCellConfig IE, and a parameter subset #i comprised in the RRC signaling # i comprises a maxMIMO-Layers field; the i is an integer between 1 and K1.

In one embodiment, the RRC signaling #i comprises a PDSCH-ServingCellConfig IE, and a parameter subset #i comprised in the RRC signaling #i comprises a nrofHARQ-ProcessesForPDSCH field; the i is an integer between 1 and K1.

In one embodiment, the RRC signaling #i comprises a PDSCH-Config IE, and a parameter subset #i comprised in the RRC signaling #i comprises a resourceAllocation field; the i is an integer between 1 and K1.

### Embodiment 10

Embodiment 10 illustrates a structure block diagram in a first node, as shown in FIG. 10. In FIG. 10, the first node 1000 comprises a first receiver 1001.

The first receiver 1001 receives a first RRC signaling set, receives first DCI and receives a PDSCH on each cell comprised in a first cell set;

In embodiment 10, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the first RRC signaling is a PDSCH-Config.

In one embodiment, the first RRC signaling comprises at least one of PDSCH-ConfigCommon or a PDSCH-ServingCellConfig.

In one embodiment, the first signaling is BWP-DownlinkCommon.

In one embodiment, a number of cell(s) comprised in the first cell set is greater than 1; the first parameter set comprises a first parameter subset, and the first parameter subset is default.

In one embodiment, a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

In one embodiment, the second RRC signaling is configured for a first reference cell, the first reference cell is a cell other than the first cell and in the first cell set, and a second field in the first DCI is used to determine the first reference cell.

In one embodiment, a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one RRC signaling in the multiple RRC signalings, and the configurations of the multiple RRC signalings for the second parameter set are expected to be the same.

In one embodiment, the first receiver 1001 comprises at least first four of the antenna 452, the receiver 454, the multi-antenna receiving processor 458, the receiving processor 456 and the controller/processor 459 in Embodiment 4.

### Embodiment 11

Embodiment 11 illustrates a structure block diagram in in a second node, as shown in FIG. 11. In FIG. 11, the second node 1100 comprises a first transmitter 1101.

The first transmitter 1101 transmits a first RRC signaling set, transmits the first DCI and transmits a PDSCH on each cell comprised in a first cell set;

In embodiment 11, the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

In one embodiment, the first RRC signaling is a PDSCH-Config.

In one embodiment, the first RRC signaling comprises at least one of PDSCH-ConfigCommon or a PDSCH-ServingCellConfig.

In one embodiment, the first signaling is BWP-DownlinkCommon.

In one embodiment, a number of cell(s) comprised in the first cell set is greater than 1; the first parameter set comprises a first parameter subset, and the first parameter subset is default.

In one embodiment, a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

In one embodiment, the second RRC signaling is configured for a first reference cell, the first reference cell is a cell other than the first cell and in the first cell set, and a second field in the first DCI is used to determine the first reference cell.

In one embodiment, a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one RRC signaling in the multiple RRC signalings, and the configurations of the multiple RRC signalings for the second parameter set are expected to be the same.

In one embodiment, the first transmitter 1101 comprises at least first four of the antenna 420, the transmitter 418, the multi-antenna transmitting processor 471, the transmitting processor 416 and the controller/processor 475 in Embodiment 4.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node in the present application includes but is not limited to mobile phones, tablet computers, notebooks, network cards, low-consumption equipment, enhanced MTC (eMTC) terminals, NB-IOT terminals, vehicle-mounted communication equipment, vehicles, cars, RSUs, aircrafts, diminutive airplanes, unmanned aerial vehicles, telecontrolled aircrafts and other wireless communication devices. The second node in the present application includes but is not limited to macro-cellular base stations, femtocell, micro-cellular base stations, home base stations, relay base station, eNB, gNB, Transmitter Receiver Point (TRP), GNSS, relay satellites, satellite base stations, space base stations, RSUs, Unmanned Aerial Vehicle (UAV), test devices, for example, a transceiver or a signaling tester simulating some functions of a base station and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

## Claims

1. A first node for wireless communications, comprising:
a first receiver, receiving a first RRC (Radio Resource Control) signaling set, receiving first DCI (Downlink Control Information) and receiving a PDSCH (Physical Downlink Shared Channel) on each cell comprised in a first cell set;
wherein the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

2. The first node according to claim 1, wherein the first RRC signaling is a PDSCH-Config.

3. The first node according to claim 1 or 2, wherein the first RRC signaling comprises at least one of PDSCH-ConfigCommon or a PDSCH-ServingCellConfig.

4. The first node according to any of claims 1-3, wherein the first RRC signaling is BWP (Bandwidth Part) - DownlinkCommon.

5. The first node according to any of claims 1-4, wherein a number of cell(s) comprised in the first cell set is greater than 1; the first parameter set comprises a first parameter subset, and the first parameter subset is default.

6. The first node according to any of claims 1-5, wherein a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

7. The first node according to claim 6, wherein the second RRC signaling is configured for a first reference cell, the first reference cell is a cell other than the first cell and in the first cell set, and a second field in the first DCI is used to determine the first reference cell.

8. The first node according to any of claims 1-7, wherein a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one of the multiple RRC signalings, and the configurations of the multiple RRC signalings for the second parameter set are expected to be the same.

9. The first node according to any of claims 1-8, wherein the first field set in the first DCI comprises a HARQ (Hybrid Automatic Repeat reQuest) process number field in the first DCI.

10. The first node according to any of claims 1-9, wherein the first field set in the first DCI comprises a TDRA (Time Domain Resource Assignment) field in the first DCI.

11. The first node according to any of claims 6-10, wherein the second RRC signaling is configured for a first reference cell, the first reference cell is a cell in the first cell set, the first reference cell is a cell with a smallest cell index among the K1 cells, and the cell index comprises ServCellIndex.

12. A second node for wireless communications, comprising:
a first transmitter, transmitting a first RRC signaling set, transmitting a first DCI and transmitting a PDSCH on each cell comprised in a first cell set;
wherein the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

13. The second node according to claim 12, wherein the first RRC signaling is a PDSCH-Config.

14. The second node according to claim 12 or 13, wherein the first RRC signaling comprises at least one of PDSCH-ConfigCommon or a PDSCH-ServingCellConfig.

15. The second node according to any of claims 12-14, wherein the first RRC signaling is BWP-DownlinkCommon.

16. The second node according to any of claims 12-15, wherein a number of cell(s) comprised in the first cell set is greater than 1; the first parameter set comprises a first parameter subset, and the first parameter subset is default.

17. The second node according to any of claims 12-16, wherein a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

18. The second node according to claim 17, wherein the second RRC signaling is configured for a first reference cell, the first reference cell is a cell other than the first cell and in the first cell set, and a second field in the first DCI is used to determine the first reference cell.

19. The second node according to any of claims 13-18, wherein a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one of the multiple RRC signalings, and the configurations of the multiple RRC signalings for the second parameter set are expected to be the same.

20. The second node according to any of claims 12-19, wherein the first field set in the first DCI comprises a HARQ process number field in the first DCI.

21. The second node according to any of claims 12-20, wherein the first field set in the first DCI comprises a TDRA field in the first DCI.

22. The second node according to any of claims 17-21, wherein the second RRC signaling is configured for a first reference cell, the first reference cell is a cell in the first cell set, the first reference cell is a cell with a smallest cell index among the K1 cells, and the cell index comprises ServCellIndex.

23. A method in a first node for wireless communications, comprising:
receiving a first RRC signaling set;
receiving a first DCI; and
receiving a PDSCH on each cell comprised in a first cell set;
wherein the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

24. The method in a first node according to claim 23, wherein the first RRC signaling is a PDSCH-Config.

25. The method in a first node according to claim 23 or 24, wherein the first RRC signaling comprises at least one of PDSCH-ConfigCommon or a PDSCH-ServingCellConfig.

26. The method in a first node according to any of claims 23-25, wherein the first RRC signaling is BWP-DownlinkCommon.

27. The method in a first node according to any of claims 23-26, wherein a number of cell(s) comprised in the first cell set is greater than 1; the first parameter set comprises a first parameter subset, and the first parameter subset is default.

28. The method in a first node according to any of claims 23-27, wherein a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

29. The method in a first node according to claim 28, wherein the second RRC signaling is configured for a first reference cell, the first reference cell is a cell other than the first cell and in the first cell set, and a second field in the first DCI is used to determine the first reference cell.

30. The method in a first node according to any of claims 23-29, wherein a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one of the multiple RRC signalings, and the configurations of the multiple RRC signalings for the second parameter set are expected to be the same.

31. The method in a first node according to any of claims 23-30, wherein the first field set in the first DCI comprises a HARQ process number field in the first DCI.

32. The method in a first node according to any of claims 23-31, wherein the first field set in the first DCI comprises a TDRA field in the first DCI.

33. The method in a first node according to any of claims 28-32, wherein the second RRC signaling is configured for a first reference cell, the first reference cell is a cell in the first cell set, the first reference cell is a cell with a smallest cell index among the K1 cells, and the cell index comprises ServCellIndex.

34. A method in a second node for wireless communications, comprising:
transmitting a first RRC signaling set;
transmitting a first DCI; and
transmitting a PDSCH on each cell comprised in a first cell set;
wherein the first RRC signaling set comprises a first RRC signaling, the first RRC signaling is configured for a first cell; the first DCI is used to schedule PDSCH(s) on cell(s) comprised in the first cell set, and the first cell is one of cell(s) comprised in the first cell set; a first field set in the first DCI is applied to the first cell set; an indication of the first field set in the first DCI depends on a first parameter set; whether the first parameter set adopts a configuration of the first RRC signaling is related to a number of cell(s) comprised in the first cell set; when a number of cell(s) comprised in the first cell set is 1, the first parameter set adopts the configuration of the first RRC signaling; when a number of cell(s) comprised in the first cell set is greater than 1, the first parameter set does not adopt the configuration of the first RRC signaling.

35. The method in a second node according to claim 34, wherein the first RRC signaling is a PDSCH-Config.

36. The method in a second node according to claim 34 or 35, wherein the first RRC signaling comprises at least one of PDSCH-ConfigCommon or a PDSCH-ServingCellConfig.

37. The method in a second node according to any of claims 34-36, wherein the first RRC signaling is BWP-DownlinkCommon.

38. The method in a second node according to any of claims 34-37, wherein a number of cell(s) comprised in the first cell set is greater than 1; the first parameter set comprises a first parameter subset, and the first parameter subset is default.

39. The method in a second node according to any of claims 34-38, wherein a number of cell(s) comprised in the first cell set is greater than 1; the first RRC signaling set comprises a second RRC signaling; the second RRC signaling is not configured for the first cell; the first parameter set comprises a second parameter subset, and the second parameter subset applies a configuration of the second RRC signaling.

40. The method in a second node according to claim 39, wherein the second RRC signaling is configured for a first reference cell, the first reference cell is a cell other than the first cell and in the first cell set, and a second field in the first DCI is used to determine the first reference cell.

41. The method in a second node according to any of claims 35-40, wherein a number of cell(s) comprised in the first cell set is greater than 1; an indication of the first field set in the first DCI depends on a second parameter set; the first RRC signaling set comprises multiple RRC signalings, and the first RRC signaling is one of the multiple RRC signalings; the multiple RRC signalings are respectively configured to multiple cells comprised in the first cell set; the second parameter set applies a configuration of at least one of the multiple RRC signalings, and the configurations of the multiple RRC signalings for the second parameter set are expected to be the same.

42. The method in a second node according to any of claims 34-41, wherein the first field set in the first DCI comprises a HARQ process number field in the first DCI.

43. The method in a second node according to any of claims 34-42, wherein the first field set in the first DCI comprises a TDRA field in the first DCI.

44. The method in a second node according to any of claims 39-43, wherein the second RRC signaling is configured for a first reference cell, the first reference cell is a cell in the first cell set, the first reference cell is a cell with a smallest cell index among the K1 cells, and the cell index comprises ServCellIndex.
